# EUROPEAN PATENT APPLICATION

(11) **EP 3 972 189 A1**
(43) Date of publication of application: **23.03.2022**
(21) Application number: 20806495.6
(22) Date of filing: 07.05.2020
(51) Int. Cl.: H04L 9/08, H04L 9/32, G06Q 20/06, G06Q 40/02

(54) **DIGITAL ASSET TRANSFER METHOD, DIGITAL ASSET TRANSFER DEVICE, AND PROGRAM**

(30) Priority: 16.05.2019 JP 2019093090
(71) Applicant: Sony Group Corporation, Tokyo 108-0075 (JP)
(72) Inventor: FUKUHARA Hiroshige, Tokyo 108-0075 (JP); KAMINO Eiji, Tokyo 108-0075 (JP); KOIKE Makoto, Tokyo 108-0075 (JP)
(74) Representative: D Young & Co LLP
(86) International application number: PCT/JP2020/018545
(87) International publication number: WO 2020/230695

(57) **Abstract**

The present disclosure relates to a digital asset transfer method, a digital asset transfer device, and a program that enable more appropriate transfer of a digital asset managed by a peer-to-peer database at the time of death of a user.

There is provided a digital asset transfer method executed by a computer, the method including: acquiring death information of a user who owns a cold wallet; identifying a transfer condition for a digital asset registered to an account associated with the cold wallet on a basis of the death information; and signing, using a secret key associated with the cold wallet, registration data registered in a P2P database to transfer the digital asset on a basis of the transfer condition; and deleting the secret key having been used in the signing.

## Description

### TECHNICAL FIELD

The present disclosure relates to a digital asset transfer method, a digital asset transfer device, and a program.

### BACKGROUND ART

In recent years, a service using a peer-to-peer database including a blockchain disclosed in Non-Patent Document 1 below has been developed. For example, Bitcoin of Non-Patent Document 2 below, or the like, which uses the blockchain for exchange of virtual currency can be exemplified.

A service using a peer-to-peer database such as a blockchain can prevent falsification or the like of data registered in the peer-to-peer database and can ensure authenticity of the data. With this feature, a service for managing assets using a peer-to-peer database has been developed. For example, a service for managing a virtual currency, a financial product, or the like by registering information regarding a digital asset obtained by tokenizing the virtual currency, the financial product, or the like in a peer-to-peer database has been developed.

In a case where transaction of a digital asset is performed using a peer-to-peer database, it is important to manage a secret key used for the transaction. Cold wallets, including hardware wallets, have been developed to securely manage a secret key. A cold wallet can securely manage a secret key in a state of being isolated from the network.

### CITATION LIST

### NON-PATENT DOCUMENT

Non-Patent Document 1: Melanie Swan, "Blockchain", (U.S.), O'Reilly Media, 2015 to 01 -22
Non-Patent Document 2: Andreas M. Antonopoulos, "Mastering Bitcoin", (U.S.), O'Reilly Media, 2014 -12-01

### SUMMARY OF THE INVENTION

### PROBLEMS TO BE SOLVED BY THE INVENTION

Here, there is a case where a digital asset managed by a peer-to-peer database cannot be appropriately transferred by an existing technology. For example, in a case where a user who owns a cold wallet in which a secret key used for management of virtual currency is recorded dies, there is a case where the digital asset cannot be transferred to other users (for example, heirs, or the like) because the secret key is not shared with the other users in advance. Furthermore, even if the secret key is shared with another user, there is a case where the other user cannot appropriately transfer the digital asset due to lack of knowledge regarding the cold wallet.

Therefore, the present disclosure has been made in view of the above-described circumstance, and an object of the present invention is to provide a new and improved digital asset transfer method, digital asset transfer device, and program capable of more appropriately transferring a digital asset managed by a peer-to-peer database at the time of death of a user.

### SOLUTIONS TO PROBLEMS

The present disclosure provides a digital asset transfer method executed by a computer, the method including: acquiring death information of a user who owns a cold wallet; identifying a transfer condition for a digital asset registered to an account associated with the cold wallet on the basis of the death information; and signing, using a secret key associated with the cold wallet, registration data registered in a P2P database to transfer the digital asset on a basis of the transfer condition; and deleting the secret key having been used in the signing.

Furthermore, the present disclosure provides a digital asset transfer device including: a user information processing unit configured to acquire death information of a user who owns a cold wallet; a transfer condition processing unit configured to identify a transfer condition for a digital asset registered to an account associated with the cold wallet on the basis of the death information; and a registration data processing unit configured to sign, using a secret key associated with the cold wallet, registration data registered in a P2P database to transfer the digital asset on the basis of the transfer condition; and a key processing unit configured to delete the secret key having been used in the signing.

Furthermore, the present disclosure provides a program that causes a computer to perform: acquiring death information of a user who owns a cold wallet; identifying a transfer condition for a digital asset registered to an account associated with the cold wallet on the basis of the death information; and signing, using a secret key associated with the cold wallet, registration data registered in a P2P database to transfer the digital asset on a basis of the transfer condition; and deleting the secret key having been used in the signing.

### BRIEF DESCRIPTION OF DRAWINGS

Fig. 1 is a diagram illustrating an overview of a blockchain, which is a type of peer-to-peer database.
Fig. 2 is a diagram illustrating an overview of a blockchain, which is a type of peer-to-peer database.
Fig. 3 is a diagram illustrating an overview of a blockchain, which is a type of peer-to-peer database.
Fig. 4 is a diagram illustrating a configuration example of an information processing system.
Fig. 5 is a block diagram illustrating a functional configuration example of a digital asset transfer device.
Fig. 6 is a block diagram illustrating a functional configuration example of a node device.
Fig. 7 is a flowchart illustrating a processing flow example related to prior registration.
Fig. 8 is a sequence diagram illustrating a processing flow example related to transfer of a digital asset.
Fig. 9 is a diagram illustrating a structure of a key according to BIP32, which is a hierarchical deterministic wallet standard.
Fig. 10 is a block diagram illustrating a hardware configuration example of an information processing device that implements the digital asset transfer device or the node device.

### MODE FOR CARRYING OUT THE INVENTION

A preferred embodiment of the present disclosure will be described in detail below with reference to the accompanying drawings. Note that in the present specification and the drawings, components having substantially the same functional configuration are designated by the same reference signs and the same description is not repeated.

Note that the description will be given in the following order.
1. Overview of Peer-to-Peer Database
2. Embodiment
   2.1. System Configuration Example
   2.2. Functional Configuration Example of Digital Asset Transfer Device
   2.3. Functional Configuration Example of Node Device
   2.4. Processing Flow Example
   2.5. Remarks
3. Hardware Configuration Example
4. Conclusion

### <1. Overview of Peer-to-Peer Database>

Before describing an embodiment of the present disclosure, first, an overview of a peer-to-peer database will be described.

In an information processing system according to the present embodiment, a distributed peer-to-peer database included in a peer-to-peer network is used. Note that the peer-to-peer network may also be referred to as a peer-to-peer distributed file system. Hereinafter, the peer-to-peer network is referred to as a "P2P network", and the peer-to-peer database is referred to as a "P2P database". An example of the P2P database is a blockchain. Therefore, first, an overview of a blockchain will be described as an example of the P2P database.

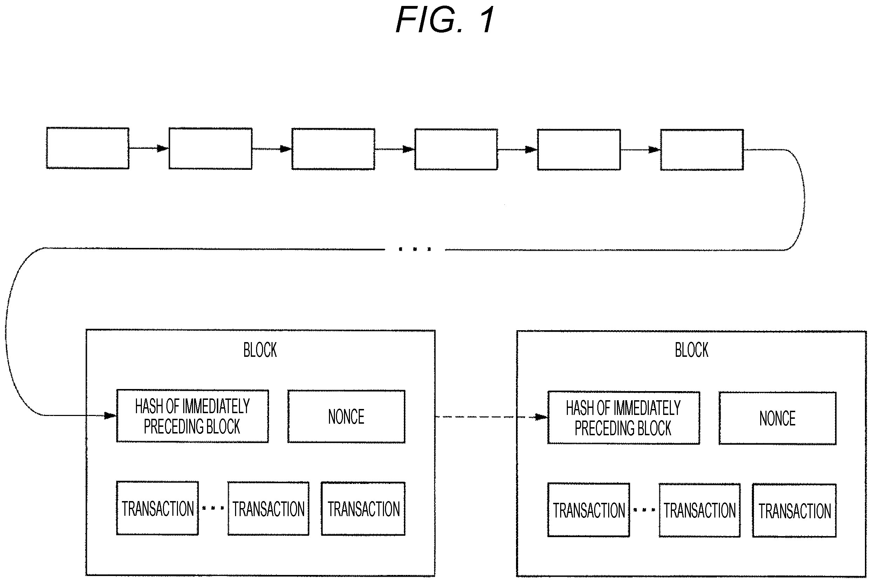

As illustrated in Fig. 1, a blockchain is data including a plurality of blocks that are linked like a chain. In each block, one or more pieces of target data may be stored as transaction data (transaction).

Examples of the blockchain include a public blockchain that is used to exchange data of a virtual currency such as Bitcoin and that can be used by many unspecified nodes. On the other hand, there are a consortium blockchain that can be used only by a plurality of specific nodes, a private blockchain that can be used only in a specific organization, and the like. Each block of the blockchain used to exchange virtual currency data includes, for example, a hash of the immediately preceding block and a value called a nonce. The hash of the immediately preceding block is information used to determine whether or not the block is a "correct block" that is correctly linked from the immediately preceding block. The nonce is information used to prevent impersonation in authentication using a hash, and falsification is prevented by using the nonce. Examples of the nonce include a character string, a numeric string, data indicating a combination thereof, and the like.

Furthermore, each piece of transaction data in the blockchain is signed using a secret key. Furthermore, each piece of transaction data is disclosed and shared by the entire P2P network.

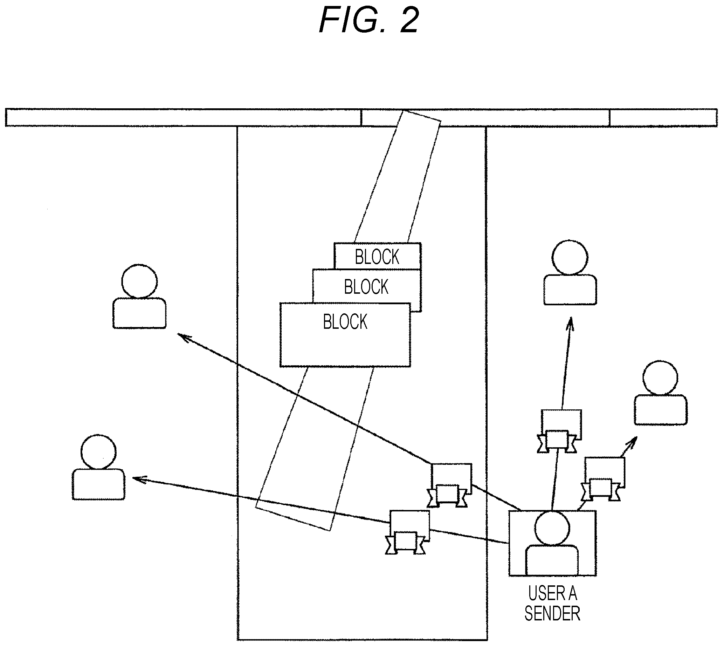

Fig. 2 is a diagram illustrating a state in which target data is registered by a user A in the blockchain system. The user A applies an electronic signature to the transaction data registered in the blockchain using a secret key of the user A. Then, the user A broadcasts the transaction data to which the electronic signature is applied on the P2P network. This ensures that the owner of the target data included in the transaction data is the user A.

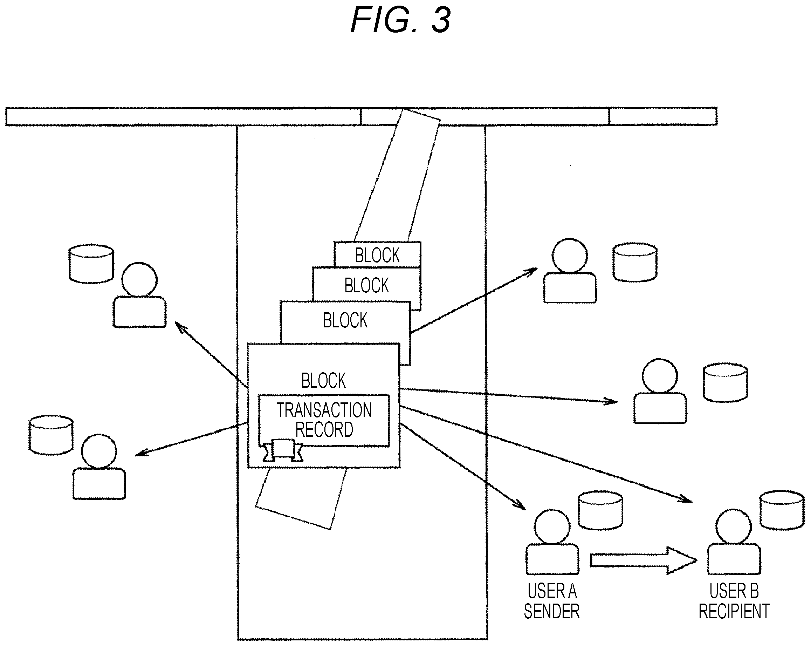

Fig. 3 is a diagram illustrating a state in which the target data is transferred from the user A to a user B in the blockchain system. The user A electronically signs the transaction data using the secret key of the user A, and includes a public key of the user B in the transaction data. It can be seen that this transfers the target data from the user A to the user B. Furthermore, the user B may acquire a public key of the user A from the user A and acquire the target data included in the electronically signed transaction data at the time of transaction of the target data.

Furthermore, in the blockchain system, in a blockchain used for exchanging existing virtual currency data, such as a blockchain of Bitcoin, another target data different from the virtual currency can be included by using, for example, a sidechain technology or the like.

### <2. Embodiment>

The overview of the P2P database has been described above. Subsequently, an embodiment of the present disclosure will be described.

### (2.1. System Configuration Example)

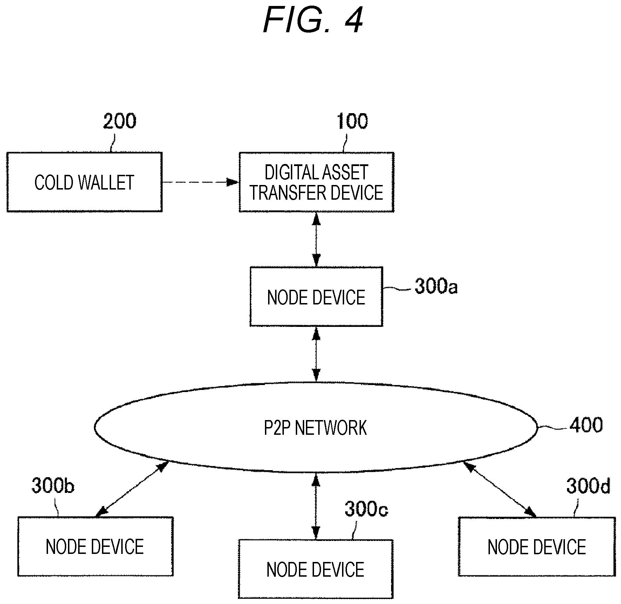

A configuration example of the information processing system according to the present embodiment will be described with reference to Fig. 4. Fig. 4 is a block diagram illustrating a configuration example of the information processing system according to the present embodiment. As illustrated in Fig. 4, the information processing system according to the present embodiment includes a digital asset transfer device 100, a cold wallet 200, and node devices 300. Furthermore, each of the plurality of node devices 300 is connected to a P2P network 400.

### (Node Device 300)

The node devices 300 are information processing devices connected to the P2P network 400 and having P2P databases. The node devices 300 manage transaction data (registration data) related to digital assets in the P2P databases.

The "digital asset" is obtained by tokenizing at least one of a movable property including virtual currency or a financial product and an asset such as real estate. "Tokenization" refers to conversion of these assets into some information, and the content and format of the converted information are not limited. The node devices 300 can prevent falsification or the like of the transaction data and secure authenticity of the transaction data (for example, the digital asset itself, information indicating the digital asset, or the like) related to the digital asset owned by each of accounts of users by managing the transaction data in the P2P database.

The node devices 300 can perform processing related to transfer of digital assets on the basis of requests from the digital asset transfer device 100. Specifically, each of the node devices 300 generates transaction data for transferring a digital asset on the basis of a request from the digital asset transfer device 100, signs the transaction data with a secret key, and broadcasts the transaction data to the other node devices 300. As a result, the transaction data is registered in the P2P database of each node device 300 through processing based on a predetermined consensus algorithm such as Proof of Work.

Note that the node device 300 can execute a predetermined program such as execution of predetermined processing in a case where a predetermined digital asset is received by using a predetermined program (for example, a smart contract or the like) executed on the P2P database included in the node device 300. By using the program, for example, various types of processing including transaction of digital assets and the like are implemented according to a predetermined rule. Hereinafter, a predetermined program provided in the P2P database and executed on the P2P database is referred to as a "P2P database program". Note that the node device 300 may appropriately implement various types of processing using programs other than the P2P database program.

### (Cold Wallet 200)

The cold wallet 200 manages a secret key used for managing a digital asset in a state of being isolated from the network. For example, the cold wallet 200 may be at least one of a hardware wallet in which information regarding the secret key is recorded (for example, an IC card type hardware wallet, a terminal type hardware wallet, or the like) or a wallet on which information regarding the secret key is stated (for example, a paper wallet or the like), and is not necessarily limited thereto. For example, the cold wallet 200 may be implemented by a storage or the like isolated from the network. In a case where a hot wallet that manages a secret key in a state where the wallet is connected to the network is used, there is a possibility that the secret key is leaked due to unauthorized access to the hot wallet, but the cold wallet 200 can prevent leakage of the secret key by preventing occurrence of unauthorized access.

### (Digital Asset Transfer Device 100)

The digital asset transfer device 100 is an information processing device that controls transfer of a digital asset managed in the P2P database under a predetermined condition such as at the time of death of a user or at the time of seizure of property. Specifically, first, the digital asset transfer device 100 acquires death information of a user who owns the cold wallet 200 from an external database or the like, and identifies a transfer condition of a digital asset registered to the account related to the cold wallet 200 on the basis of the death information.

The "death information" is some kind of information indicating that the user has died. For example, the death information includes information generated according to various procedures that occur when the user dies. Specifically, in a case where an account of a financial institution is frozen due to the death of the user, information indicating the freeze of the account is included in the death information. In this case, the digital asset transfer device 100 acquires the death information through communication cooperation with an external device (for example, a server or the like) managed by the financial institution.

The "transfer condition" includes information regarding the digital asset to be transferred (for example, the amount of virtual currency, the conversion amount in legal currency, the content of a financial product, the content of real estate, or the like), information regarding the transfer condition (for example, the state of a heir, the use of the digital asset after transfer, or the like), and information regarding the transfer destination (for example, information indicating a user or a group who is the heir).

Then, the digital asset transfer device 100 requests the node device 300 to generate transaction data to be registered in the P2P database in order to transfer the digital asset on the basis of the transfer condition. Alternatively, the digital asset transfer device 100 may generate transaction data. Thereafter, the digital asset transfer device 100 receives the transaction data generated by the node device 300 and signs the transaction data using the secret key associated with the cold wallet 200. For example, the digital asset transfer device 100 acquires the secret key when the hardware wallet and the digital asset transfer device 100 temporarily communicate with each other (for example, an IC card type hardware wallet performs communication cooperation with the digital asset transfer device 100 by holding the IC card type hardware wallet over a card reader) or the secret key written on the surface of a paper wallet is manually input, and signs the transaction data using the secret key. Alternatively, the digital asset transfer device 100 may transmit the generated transaction data to the cold wallet 200, and the cold wallet 200 may sign the transaction data using the secret key. In this case, the cold wallet 200 transmits the signed transaction data to the digital asset transfer device 100.

The digital asset transfer device 100 transmits the signed transaction data to the node device 300 for registration in the P2P database. Thus, the signed transaction data is registered in the P2P database through processing based on a predetermined consensus algorithm. Moreover, the digital asset transfer device 100 deletes the secret key having been used for the signature. As a result, the digital asset transfer device 100 can prevent leakage of the secret key. Furthermore, the digital asset transfer device 100 may include the functions of the node device 300, and the digital asset transfer device 100 may record the signed transaction data in the P2P database.

Note that, in this description, a case where the digital asset transfer device 100 realizes the transfer of the digital asset will be specifically described, but the digital asset transfer device 100 may not necessarily transfer the digital asset. For example, the digital asset transfer device 100 may perform various types of processing using the secret key, such as decrypting an account included in an existing wallet using the secret key.

### (P2P Network 400)

The P2P network 400 is a network through which data registered in the P2P database is distributed. As described above, each node device 300 can update the P2P database while maintaining consistency with the P2P database held by another node device 300 by being connected to the P2P network 400.

Note that the type of the P2P network 400 is not particularly limited. For example, the P2P network 400 may be of any one of a consortium type operated by a plurality of organizations, a private type operated by a single organization, or a public type in which participants are not particularly limited.

Note that the communication method, the line type, and the like used for the P2P network 400 are not particularly limited. For example, the P2P network 400 may be implemented by a dedicated network such as Internt Protocol-Virtual Private Network (IP-VPN). Furthermore, the P2P network 400 may be formed by a public network such as the Internet, a telephone line network, a satellite communication network, various local area networks (LANs) including Ethernet (registered trademark), a wide area network (WAN), and the like. Moreover, the P2P network 400 may be formed by a wireless communication network such as Wi-Fi (registered trademark) or Bluetooth (registered trademark).

The configuration example of the information processing system according to the present embodiment has been described. Note that the configuration described above with reference to Fig. 4 is merely an example, and the configuration of the information processing system according to the present embodiment is not limited to the example. For example, some or all of the functions of the digital asset transfer device 100 may be implemented by the node device 300. Furthermore, some or all of the functions of the node device 300 may be implemented by the digital asset transfer device 100. The configuration of the information processing system according to the present embodiment can be flexibly modified according to specifications and operations.

### (2.2. Functional Configuration Example of Digital Asset Transfer Device)

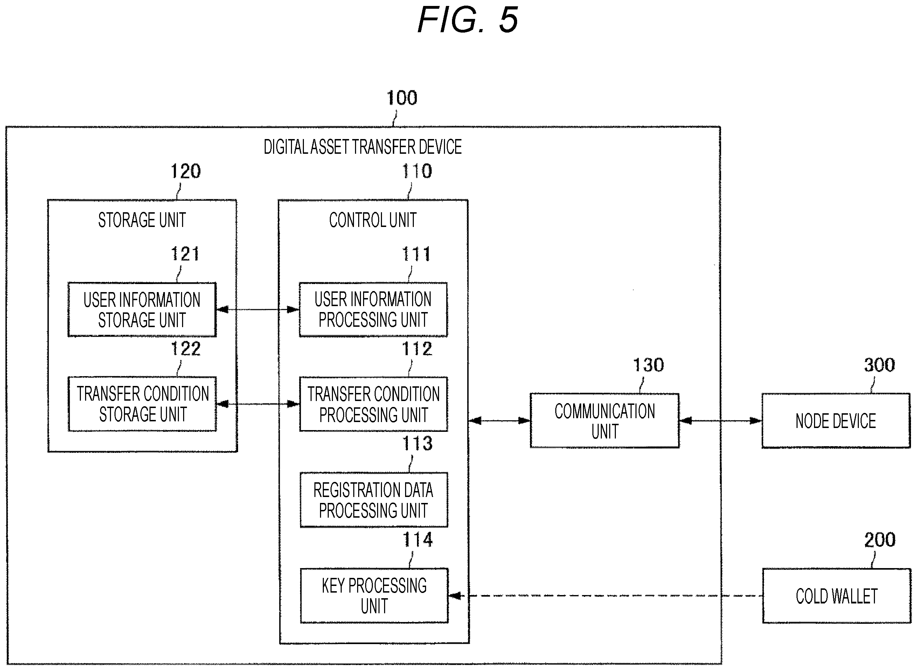

The configuration example of the information processing system according to the present embodiment has been described above. Next, a functional configuration example of the digital asset transfer device 100 will be described with reference to Fig. 5. Fig. 5 is a block diagram illustrating the functional configuration example of the digital asset transfer device 100.

As illustrated in Fig. 5, the digital asset transfer device 100 includes a control unit 110, a storage unit 120, and a communication unit 130. Then, the control unit 110 includes a user information processing unit 111, a transfer condition processing unit 112, a registration data processing unit 113, and a key processing unit 114. Furthermore, the storage unit 120 includes a user information storage unit 121 and a transfer condition storage unit 122.

The control unit 110 is a functional component that comprehensively controls overall processing performed by the digital asset transfer device 100. For example, the control unit 110 can control start and stop of each functional component on the basis of information received by the communication unit 130, information input via an input unit (not illustrated), and the like, and can control output and the like by an output unit (not illustrated). Note that the control content of the control unit 110 is not limited thereto. For example, the control unit 110 may control processing (for example, processing related to an operating system (OS) or the like) generally performed in various servers, general-purpose computers, PCs, tablet PCs, or the like.

The user information processing unit 111 is a functional component that performs processing related to user information. The "user information" may be any information regarding a user (for example, the name, age, sex, address, occupation, account number of a financial institution, and the like of the user), and includes at least death information. For example, in a case where the name, age, sex, address, occupation, account number of a financial institution, or the like of a user is input as the prior information to an external device (for example, a smartphone owned by a user or the like), the user information processing unit 111 acquires these pieces of information through communication cooperation with the external device and stores the acquired information in the user information storage unit 121. Furthermore, in a case where the account of the financial institution is frozen due to the death of the user, the user information processing unit 111 acquires death information of the user through communication cooperation with an external device (for example, a server or the like) managed by the financial institution, and provides the death information to the transfer condition processing unit 112. Note that the content of the user information is not necessarily limited to the above.

The transfer condition processing unit 112 is a functional component that performs processing related to a transfer condition. The content of the transfer condition has been described above. In a case where the transfer condition is input to an external device (for example, a smartphone owned by a user or the like) as prior information, the transfer condition processing unit 112 acquires the transfer condition through communication cooperation with the external device and stores the transfer condition in the transfer condition storage unit 122. Furthermore, in a case where the death information of the user is provided from the user information processing unit 111, the transfer condition processing unit 112 identifies the transfer condition of the digital asset (registered to the account related to the cold wallet 200 owned by the user) on the basis of the death information, and provides the transfer condition to the registration data processing unit 113.

The registration data processing unit 113 is a functional component that performs processing related to the transaction data (registration data). Specifically, in a case where the transfer condition is provided from the transfer condition processing unit 112, the registration data processing unit 113 generates information for requesting generation of transaction data on the basis of the transfer condition (hereinafter, referred to as a generation request), and provides the generation request to the node device 300 via the communication unit 130. Thus, the node device 300 generates transaction data and provides the transaction data to the digital asset transfer device 100.

Then, the registration data processing unit 113 signs the transaction data to be registered in the P2P database for transferring the digital asset on the basis of the transfer condition using the secret key related to the cold wallet 200. For example, the registration data processing unit 113 acquires the secret key when the hardware wallet and the digital asset transfer device 100 temporarily communicate with each other (for example, an IC card type hardware wallet performs communication cooperation by holding the IC card type hardware wallet over a card reader) or the secret key written on the surface of the paper wallet is manually input, and signs the transaction data using the secret key. The registration data processing unit 113 provides the signed transaction data to the node device 300 via the communication unit 130. Thus, after the node device 300 performs processing based on the predetermined consensus algorithm, the signed transaction data can be registered in the P2P database.

The key processing unit 114 is a functional component that performs processing related to various keys. Specifically, the key processing unit 114 performs processing related to a secret key. For example, after the registration data processing unit 113 signs transaction data using a secret key, the key processing unit 114 deletes the secret key having been used for the signature. As a result, the key processing unit 114 can prevent leakage of the secret key. Note that the secret key is not necessarily deleted.

The storage unit 120 is a functional component that stores various types of information. For example, the storage unit 120 stores a program or a parameter used by each functional component of the digital asset transfer device 100 and stores transaction data provided from the node device 300. Note that the information stored in the storage unit 120 is not limited thereto.

The user information storage unit 121 is a functional component that stores user information. For example, the user information storage unit 121 stores, as the user information, the name, age, sex, address, occupation, account number of a financial institution, and the like of a user provided from the user information processing unit 111.

The transfer condition storage unit 122 is a functional component that stores a transfer condition. For example, the transfer condition storage unit 122 stores, as the transfer condition, information regarding the digital asset to be transferred (for example, the amount of virtual currency, the conversion amount in legal currency, the content of a financial product, the content of real estate, or the like), information regarding the transfer condition (for example, the state of a heir, the use of the digital asset after transfer, or the like), and information indicating the transfer destination (for example, information indicating a user or a group who is the heir).

The communication unit 130 is a functional component that performs various communications with the node device 300. For example, the communication unit 130 transmits a request for generating transaction data to the node device 300 and receives the transaction data from the node device 300. Furthermore, after the transaction data is signed, the communication unit 130 transmits the signed transaction data to the node device 300. Note that the communication content of the communication unit 130 is not limited thereto.

The functional configuration example of the digital asset transfer device 100 has been described above. Note that the functional configuration described above with reference to Fig. 5 is merely an example, and the functional configuration of the digital asset transfer device 100 is not limited to the example. For example, the digital asset transfer device 100 may not necessarily include all of the functional components illustrated in Fig. 5, and may include a functional component not illustrated in Fig. 5. Furthermore, the functional configuration of the digital asset transfer device 100 can be flexibly modified according to specifications and operations.

### (2.3. Functional Configuration Example of Node Device)

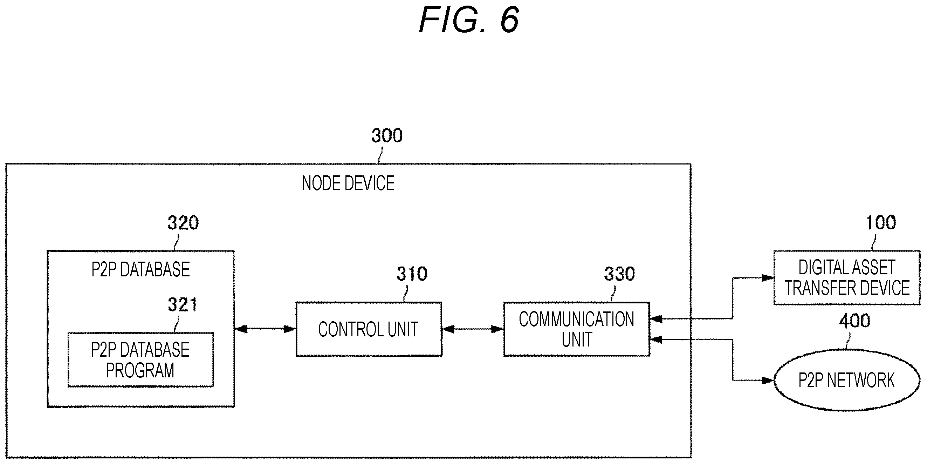

The functional configuration example of the digital asset transfer device 100 has been described above. Next, a functional configuration example of each of the node devices 300 will be described with reference to Fig. 6. Fig. 6 is a block diagram illustrating a functional configuration example of the node device 300.

As illustrated in Fig. 6, the node device 300 includes a control unit 310, a P2P database 320, and a communication unit 330. The P2P database 320 includes a P2P database program 321.

The control unit 310 is a functional component that comprehensively controls overall processing performed by the node device 300. For example, the control unit 310 controls the transaction data generation processing by inputting a transaction data generation request provided from the digital asset transfer device 100 to a predetermined program (for example, a program recorded in a memory, or the like). Furthermore, the control unit 310 controls the registration processing of the signed transaction data in the P2P database 320 by inputting the signed transaction data provided from the digital asset transfer device 100 to a predetermined program (for example, a program recorded in a memory or the like) (in other words, controls processing of transferring a digital asset). Note that the control content of the control unit 310 is not limited thereto. For example, the control unit 310 may control processing (for example, processing related to the OS or the like) generally performed in various servers, general-purpose computers, PCs, tablet PCs, or the like.

The P2P database 320 is a database held in the node device 300, and is, for example, a part of a blockchain. As described above, the transaction data related to a digital asset owned by each account such as a user (for example, the digital asset itself, information indicating the digital asset, or the like) is registered in the P2P database 320. Note that the data registered in the P2P database 320 is not limited thereto. Furthermore, various types of data registered in the P2P database 320 may be encrypted using an encryption key.

The P2P database program 321 is a predetermined program provided in the P2P database 320 and executed on the P2P database 320. By using the P2P database program 321, various types of processing accompanying the transfer of the digital asset are implemented while maintaining consistency according to a predetermined rule. Furthermore, since the P2P database program 321 is provided in the P2P database 320, the risk of illegal modification of the program is reduced. The P2P database program 321 may be a chain code in Hyperledger or the like, but is not necessarily limited thereto. For example, the P2P database program 321 may be a smart contract.

Note that the processing implemented by the P2P database program 321 is not particularly limited. The development language of the P2P database program 321, the number of P2P database programs 321 provided on the P2P database 320, and the like are not particularly limited.

The communication unit 330 is a functional component that controls various communications with an external device. For example, regarding communication with the digital asset transfer device 100, the communication unit 330 receives a request for generating transaction data from the node device 300 and transmits the transaction data to the digital asset transfer device 100. Furthermore, after the transaction data is signed, the communication unit 330 receives the signed transaction data from the digital asset transfer device 100. Furthermore, regarding communication with another node device 300, the communication unit 330 transmits and receives information used for updating the P2P database 320 and the like (for example, information used for consensus, and the like). Note that the communication content of the communication unit 330 is not limited thereto.

The functional configuration example of the node device 300 has been described above. As described above, some or all of the functions of the digital asset transfer device 100 may be implemented by the node device 300. For example, at least one of the user information processing unit 111, the transfer condition processing unit 112, the registration data processing unit 113, or the key processing unit 114 of the digital asset transfer device 100 may be implemented by a predetermined program provided in the P2P database 320 and executed on the P2P database 320, that is, the P2P database program 321.

Note that the functional configuration described above with reference to Fig. 6 is merely an example, and the functional configuration of the node device 300 is not limited to the example. For example, the node device 300 may not necessarily include all of the functional components illustrated in Fig. 6, and may include a functional component not illustrated in Fig. 6. Furthermore, the functional configuration of the node device 300 can be flexibly modified according to specifications and operations.

### (2.4. Processing Flow Example)

The functional configuration example of the node device 300 has been described above. Next, a processing flow example of each device in the information processing system will be described.

### (Processing Flow Example related to Prior Registration)

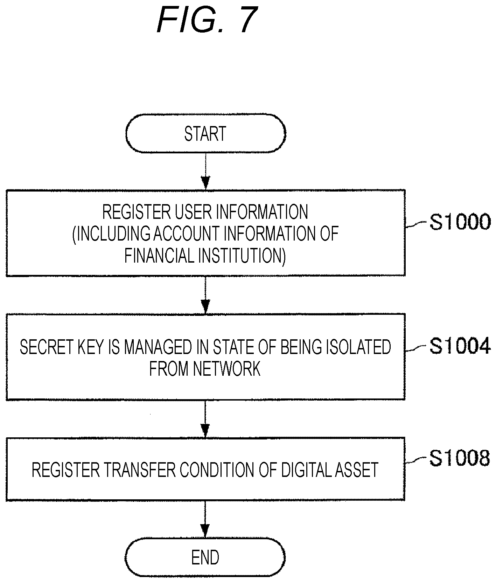

Fig. 7 is a flowchart illustrating a processing flow example related to prior registration for performing transfer processing of a digital asset accompanying death of a user or the like.

In step S1000, the user information processing unit 111 of the digital asset transfer device 100 registers user information including account information of a financial institution. For example, in a case where the name, age, sex, address, occupation, account number of a financial institution, or the like of a user who owns the cold wallet 200 is input as the prior information to an external device (for example, a smartphone owned by a user or the like), the user information processing unit 111 acquires these pieces of information through communication cooperation with the external device and stores the acquired information in the user information storage unit 121.

In step S1004, the secret key is managed in a state of being isolated from the network. For example, the cold wallet 200 itself may be managed by a financial institution or the like, or a secret key that is the same as that of the cold wallet 200 owned by the user, a part of secret keys obtained by secret sharing by Shamir's secret sharing scheme or the like, or a part of a secret key used for multi-signature may be stored in a storage or the like isolated from a network. In step S1008, the transfer condition processing unit 112 registers the transfer condition of the digital asset. Specifically, in a case where the transfer condition is input to an external device (for example, a smartphone owned by a user or the like) as prior information, the transfer condition processing unit 112 acquires the transfer condition through communication cooperation with the external device and stores the transfer condition in the transfer condition storage unit 122.

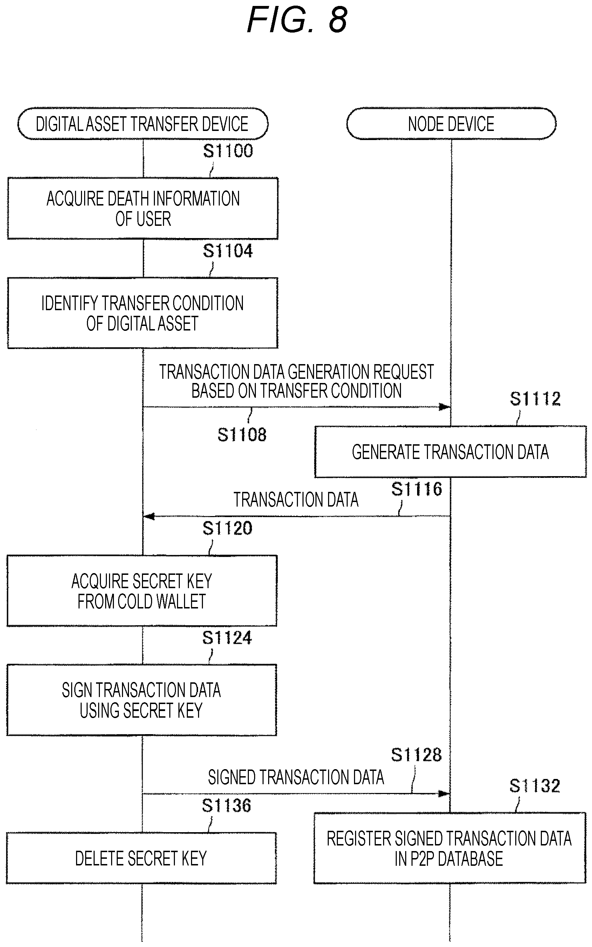

Thus, a series of processing related to prior registration ends. Note that the steps in the flowchart of Fig. 7 do not necessarily be performed in time series in the described order. That is, the steps in the flowchart may be performed in an order different from the described order or may be performed in parallel (the same applies to the sequence diagram of Fig. 8 described below).

### (Processing Flow Example Related to Transfer of Digital Asset)

Fig. 8 is a sequence diagram illustrating a processing flow example related to transfer of a digital asset.

In step S1100, the user information processing unit 111 of the digital asset transfer device 100 acquires death information of a user. For example, in a case where the account of the financial institution is frozen due to the death of the user, the user information processing unit 111 acquires death information of the user through communication cooperation with an external device (for example, a server or the like) managed by the financial institution.

In step S1104, the transfer condition processing unit 112 identifies a transfer condition of the digital asset (registered to an account associated with the cold wallet 200 owned by the user) on the basis of the death information. In step S1108, the registration data processing unit 113 generates a transaction data generation request on the basis of the transfer condition, and provides the generation request to the node device 300 via the communication unit 130.

The control unit 310 of the node device 300 generates transaction data on the basis of the transaction data generation request in step S1112, and provides the transaction data to the digital asset transfer device 100 via the communication unit 330 in step S1116.

In step S1120, the registration data processing unit 113 of the digital asset transfer device 100 acquires the secret key from the cold wallet 200. For example, the registration data processing unit 113 acquires the secret key when the hardware wallet and the digital asset transfer device 100 temporarily communicate with each other (for example, an IC card type hardware wallet performs communication cooperation with the digital asset transfer device 100 by holding the IC card type hardware wallet over a card reader) or the secret key written on the surface of the paper wallet is manually input. Note that the cold wallet 200 of which the secret key is acquired by the registration data processing unit 113 is assumed to be managed by a financial institution or the like as described in step S1004 of Fig. 7, for example. That is, the secret key (or at least a part of a shared secret key) is doubly managed by the dead user and the financial institution, or the like, and the registration data processing unit 113 acquires the secret key from the financial institution or the like.

In step S1124, the registration data processing unit 113 signs the transaction data using the secret key. In step S1128, the registration data processing unit 113 provides the signed transaction data to the node device 300 via the communication unit 130.

In step S1132, the control unit 310 of the node device 300 registers the signed transaction data in the P2P database 320 by performing processing based on a predetermined consensus algorithm. As a result, the digital asset is appropriately transferred on the basis of the transfer condition.

In step S1136, the key processing unit 114 of the digital asset transfer device 100 deletes the secret key having been used for the signature. As a result, the key processing unit 114 can prevent leakage of the secret key. Thus, a series of processing related to the transfer of the digital asset ends.

### (2.5. Remarks)

The processing flow example of each device in the information processing system has been described above. Next, other matters according to the present embodiment will be described.

### (Regarding Secret Key)

The secret key having been described above may be a key in a so-called hierarchical deterministic wallet.

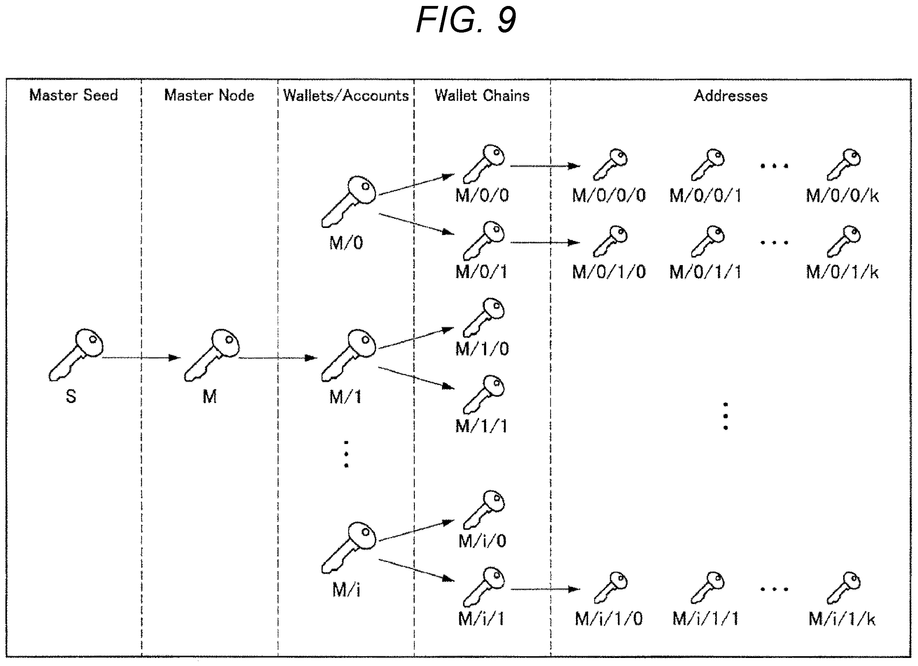

Fig. 9 is a diagram illustrating a structure of a key according to BIP32, which is a hierarchical deterministic wallet standard. As illustrated in Fig. 9, according to BIP32, keys are configured in a hierarchy. Specifically, according to BIP32, on the basis of a key called Seed in the Master Seed layer (denoted as "S" in Fig. 9), keys of lower layers are generated by a calculation formula of an elliptic curve. In other words, it can be said that the keys lower than Seed are reproducible derived keys generated on the basis of Seed. As illustrated in Fig. 9, Seed is at the highest level, and a master key (denoted as "M" in Fig. 9) in the Master Node layer is generated from Seed. Moreover, key generation is repeated such that from the master key, child keys in the Wallets/Accounts layer (denoted as "M/0" to "M/i" in Fig. 9) are generated, and from these child keys, other child keys in the Wallet Chains layer (denoted as "M/0/0" to "M/i/1" in Fig. 9) are generated, and thus child keys in up to the Addresses layer (denoted as "M/0/0/0" to "M/i/1/k" in Fig. 9) can be generated.

The secret key described above may be any of all keys from Seed in the Master Seed layer to the child keys in the Addresses layer illustrated in Fig. 9. That is, the secret key is at least one of information used for generating another key by a calculation formula of an elliptic curve or information generated from another key by a calculation formula of an elliptic curve. By using the hierarchical deterministic wallet, a user can use different keys depending on the target, use, or the like of the digital asset. For example, a user can use a certain child key for the transfer of virtual currency and use another child key for the transfer of real estate. Different keys are used depending on the target, use, or the like of the digital asset, so that damage in a case where a part of keys is leaked is limited.

Here, it can be said that management of Seed becomes more important in a case where a hierarchical deterministic wallet is used since the keys below Seed can be decrypted when Seed leaks. Since Seed itself is represented by a binary value, it is not easy for a person to remember Seed or to take a note of Seed, and thus it is not easy to manage Seed. Therefore, Seed according to the present embodiment may be represented by a mnemonic code. The "mnemonic code" refers to a combination of simplified characters or symbols that replaces some information (here, a secret key such as Seed) for easy understanding and description by a person. Since a secret key such as Seed according to the present embodiment is represented by a mnemonic code, a person can easily remember and take a note of the secret key, so that it is easy to appropriately manage the secret key without leakage.

Furthermore, the secret key according to the present embodiment may be at least one of two or more secret keys used for a signature performed to register transaction data (registration data) in the P2P database 320. For example, in a case where a plurality of signatures (so-called multi-signature) is performed on transaction data to be registered in the P2P database 320, the secret key according to the present embodiment may be at least one of a plurality of secret keys used for the plurality of signatures. As a result, even if a part of the plurality of secret keys used for the signatures is leaked, registration of the transaction data is not successful, so that security is enhanced. Furthermore, the secret key according to the present embodiment may be a part of secret keys obtained by secret sharing by Shamir's secret sharing scheme or the like.

### (Regarding Legal Procedure)

In a case where an asset is managed as a digital asset in the P2P database 320 as in the present embodiment, it may be required to consider legal procedures depending on the target of the digital asset. For example, in a case where the target of the digital asset is real estate, acquisition, loss, and change of property rights cannot be asserted against a third party unless registration is performed according to the Real Property Registration Act or other laws related to registration. It goes without saying that a predetermined legal procedure according to a predetermined law may be required not only for real estate but also for a movable property (for example, a change of name procedure for an automobile or the like).

In view of this circumstance, the digital asset transfer device 100 may perform processing related to a legal procedure required for the transfer of a digital asset corresponding to the target of the digital asset. Specifically, the digital asset transfer device 100 recognizes information regarding a legal procedure required for the transfer of a digital asset (for example, contents of data used for the legal procedure, a transmission destination of the data, and the like) for each of targets of digital assets. Then, the digital asset transfer device 100 not only realizes registration of the signed transaction data in the P2P database 320, but also generates information for requesting a predetermined legal procedure such as registration depending on the target of the digital asset (hereinafter, a procedure request), and provides the procedure request to a predetermined external device that takes the legal procedure via the communication unit 130. When the external device takes the legal procedure, the transfer of the digital asset is legally realized.

Note that the legal procedure itself required for the transfer of the digital asset may be realized by a P2P database including a blockchain. In this case, the digital asset transfer device 100 requests a device holding the P2P database to generate transaction data or the like.

### (Transfer of Digital Asset)

The digital asset may be transferred to a certain account and then transferred to the transfer destination account by registration of transaction data (registration data) in the P2P database 320. For example, the digital asset may be temporarily transferred to an account of a financial institution or the like that controls transfer processing, and may be transferred to the transfer destination account after various procedures (for example, evaluation, tax processing, registration, or the like of the digital asset) are completed.

In the present embodiment, the secret key is appropriately managed by the cold wallet 200, so that there is a low possibility that the secret key is leaked. However, in a case where the secret key is leaked to a third party, there is a possibility that the digital asset is illegally acquired by the third party before the transfer. Therefore, as described above, such a risk can be prevented by temporarily transferring the digital asset to an account of a financial institution or the like before the transfer. Note that the type of an account to which the digital asset is temporarily transferred before the transfer is not particularly limited.

### (Regarding Handling of Personal Information)

In the above description, it has been described that the digital asset is obtained by tokenizing at least one of a movable property including virtual currency or a financial product, or real estate. Here, the content of the digital asset is not necessarily limited thereto, and may be obtained by, for example, tokenizing some information regarding the user such as personal information. Specifically, the personal information itself or information indicating the personal information may be appropriately encrypted and registered in the P2P database 320. Then, these pieces of information may be transferred to one or more other users or the like on the basis of a transfer condition by the digital asset transfer device 100 after the death of the user.

The utility value of personal information including, for example, a behavior history, a purchase history, a search history, and the like is increasing in various businesses. In view of this circumstance, the personal information itself or information indicating the personal information is registered in the P2P database 320, and the digital asset transfer device 100 transfers the information after the death of the user, so that the user can appropriately manage the personal information or utilize the personal information as an asset. Note that it does not particularly matter whether the personal information after the transfer is operated according to the transfer condition set before the user dies or according to the intention of the user who is the transfer destination. For example, in a case where a transfer condition that the personal information is not disclosed to users other than the transfer destination user is set, it does not particularly matter whether the personal information after the transfer is operated without being disclosed to users other than the transfer destination user according to the transfer condition, or the personal information after the transfer may be operated being disclosed to the public if permitted by the transfer destination user.

### <3. Hardware Configuration Example>

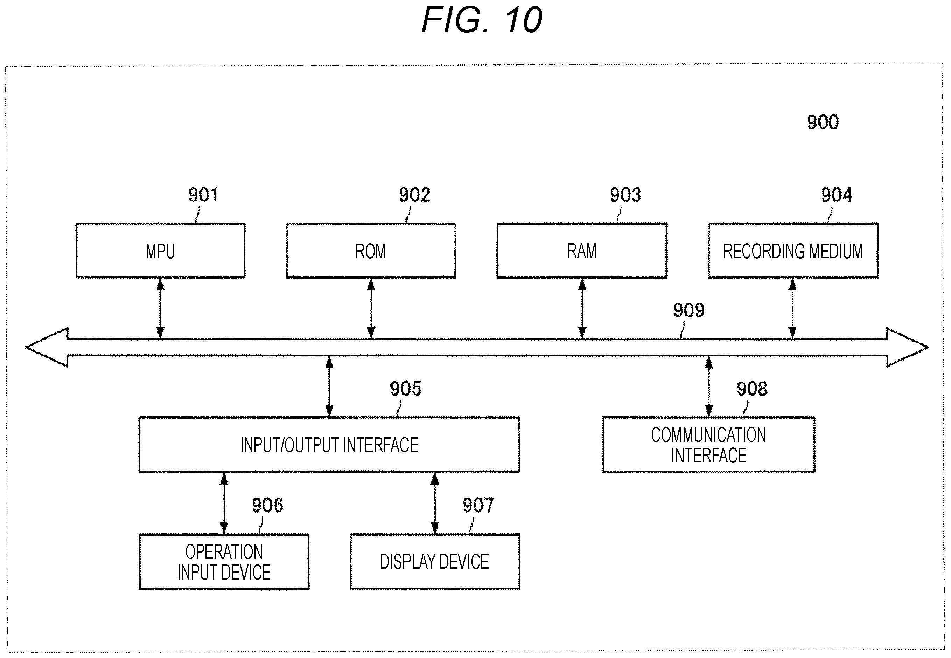

The other functions according to the present embodiment have been described above. Next, a hardware configuration of each device will be described with reference to Fig. 10. Fig. 10 is a block diagram illustrating a hardware configuration example of an information processing device 900 that implements the digital asset transfer device 100 or the node device 300.

The information processing device 900 includes, for example, an MPU 901, a ROM 902, a RAM 903, a recording medium 904, an input/output interface 905, an operation input device 906, a display device 907, and a communication interface 908. Furthermore, the information processing device 900 connects the components by, for example, a bus 909 as a data transmission path.

The MPU 901 includes, for example, one or more processors each including an arithmetic circuit such as an MPU, various processing circuits, and the like, and functions as the control unit 110 of the digital asset transfer device 100 or the control unit 310 of the node device 300. Note that these functional components may be implemented by a dedicated (or general-purpose) circuit (for example, a processor or the like separate from the MPU 901) capable of realizing the various types of processing described above.

The ROM 902 stores programs, control data such as operation parameters, and the like used by the MPU 901. The RAM 903 temporarily stores, for example, a program and the like executed by the MPU 901.

The recording medium 904 functions as the storage unit 120 of the digital asset transfer device 100 or the P2P database 320 of the node device 300, and stores various types of data such as data, various programs, and the like related to the information processing according to the present embodiment. Here, examples of the recording medium 904 include a magnetic recording medium such as a hard disk, and a nonvolatile memory such as a flash memory. Furthermore, the recording medium 904 may be detachable from the information processing device 900.

The input/output interface 905 connects, for example, the operation input device 906 and the display device 907. Here, examples of the input/output interface 905 include a universal serial bus (USB) terminal, a digital visual interface (DVI) terminal, a high-definition multimedia interface (HDMI) (registered trademark) terminal, various processing circuits, and the like.

Furthermore, the operation input device 906 is provided on, for example, the information processing device 900 and is connected to the input/output interface 905 inside the information processing device 900. Examples of the operation input device 906 include a keyboard, a mouse, a keypad, a touch panel, a microphone, an operation button, a rotary selector such as a direction key or a jog dial, or a combination thereof.

Furthermore, the display device 907 is provided on, for example, the information processing device 900 and is connected to the input/output interface 905 inside the information processing device 900. Examples of the display device 907 include a liquid crystal display, an organic electro-luminescence display (EL display), and the like.

Note that it goes without saying that the input/output interface 905 can be connected to an external device such as an operation input device of or an external display device outside the information processing device 900. Furthermore, the display device 907 may be a device that can display and allow a user operation, such as a touch panel.

The communication interface 908 is a communication unit included in the information processing device 900, and functions as the communication unit 130 of the digital asset transfer device 100 or the communication unit 330 of the node device 300. Furthermore, the communication interface 908 may have, for example, a function of performing wireless or wired communication with any external device such as a server via any network (alternatively, directly). Here, examples of the communication interface 908 include a communication antenna and a radio frequency (RF) circuit (wireless communication), an IEEE 802.15.1 port and a transmission/reception circuit (wireless communication), an IEEE 802.11 port and a transmission/reception circuit (wireless communication), a local area network (LAN) terminal, a transmission/reception circuit (wired communication), and the like.

Note that the hardware configuration of the information processing device 900 is not limited to the configuration illustrated in Fig. 10. For example, the information processing device 900 may not include the communication interface 908 in a case where communication is performed via a connected external communication device. Furthermore, the communication interface 908 may have a configuration allowing communication by a plurality of communication methods. Furthermore, the information processing device 900 may not include, for example, the operation input device 906, the display device 907, or the like. Furthermore, for example, a part or all of the components illustrated in Fig. 10 may be realized by one or more integrated circuits (ICs).

### <4. Conclusion>

As described above, the digital asset transfer device 100 acquires death information of the user who owns the cold wallet 200, and identifies a transfer condition of the digital asset registered to the account associated with the cold wallet 200 on the basis of the death information. Furthermore, the digital asset transfer device 100 signs the transaction data to be registered in the P2P database 320 for transferring the digital asset on the basis of the transfer condition using the secret key related to the cold wallet 200. Then, the digital asset transfer device 100 transmits the signed transaction data to the node device 300 for registration in the P2P database 320. Therefore, the digital asset transfer device 100 can appropriately transfer the digital asset. Finally, the digital asset transfer device 100 deletes the secret key having been used for the signature. Therefore, the digital asset transfer device 100 can prevent leakage of the secret key.

Although the preferred embodiments of the present disclosure have been described in detail with reference to the accompanying drawings, the technical scope of the present disclosure is not limited to such examples. It is obvious that a person having ordinary knowledge in the technical field of the present disclosure can come up with various changes or modifications within the scope of the technical idea described in the claims, and it is understood naturally that such changes and modifications also belong to the technical scope of the present disclosure.

Furthermore, the effects described herein are merely explanatory or exemplary and are not limited. That is, the techniques according to the present disclosure may exhibit other effects apparent to those skilled in the art from the present specification, in addition to or in place of the above-described effects.

Note that configurations described later also belong to the technical scope of the present disclosure.
(1) A digital asset transfer method executed by a computer, the method comprising:
   acquiring death information of a user who owns a cold wallet;
   identifying a transfer condition for a digital asset registered to an account associated with the cold wallet on a basis of the death information; and
   signing, using a secret key associated with the cold wallet, registration data registered in a P2P database to transfer the digital asset on a basis of the transfer condition; and
   deleting the secret key having been used in the signing.
(2) The digital asset transfer method according to above-described (1) further comprising transmitting the signed registration data to an external device for registration in the P2P database.
(3) The digital asset transfer method according to above-described (1) or (2) further comprising acquiring the death information through communication cooperation with an external device managed by a financial institution.
(4) The digital asset transfer method according to any one of above-described (1) to (3), wherein the cold wallet is at least one of a hardware wallet in which information regarding the secret key is recorded or a wallet on which information regarding the secret key is stated.
(5) The digital asset transfer method according to any one of above-described (1) to (4), wherein a target of the digital asset is at least one of a movable property including virtual currency or a financial product, or real estate.
(6) The digital asset transfer method according to above-described (5) further comprising performing processing related to a legal procedure required for transfer of the digital asset corresponding to the target of the digital asset.
(7) The digital asset transfer method according to any one of above-described (1) to (6), wherein the secret key is at least one of information used for generating another key by a calculation formula of an elliptic curve or information generated from another key by a calculation formula of an elliptic curve.
(8) The digital asset transfer method according to any one of above-described (1) to (7), wherein the secret key is represented by a mnemonic code.
(9) The digital asset transfer method according to any one of above-described (1) to (8), wherein the secret key is at least one of two or more secret keys used in the signing performed to register the registration data in the P2P database.
(10) The digital asset transfer method according to any one of above-described (1) to (9), wherein the digital asset is transferred to a certain account and then transferred to a transfer destination account by registration of the registration data in the P2P database.
(11) The digital asset transfer method according to any one of above-described (1) to (10), wherein at least a part of processing is implemented by a predetermined program provided in the P2P database and executed on the P2P database.
(12) The digital asset transfer method according to any one of above-described (1) to (11), wherein the P2P database is implemented by a blockchain.
(13) A digital asset transfer device comprising:
   a user information processing unit configured to acquire death information of a user who owns a cold wallet;
   a transfer condition processing unit configured to identify a transfer condition for a digital asset registered to an account associated with the cold wallet on a basis of the death information; and
   a registration data processing unit configured to sign, using a secret key associated with the cold wallet, registration data registered in a P2P database to transfer the digital asset on a basis of the transfer condition; and
   a key processing unit configured to delete the secret key having been used in the signing.
(14) A program that causes a computer to perform:
   acquiring death information of a user who owns a cold wallet;
   identifying a transfer condition for a digital asset registered to an account associated with the cold wallet on a basis of the death information; and
   signing, using a secret key associated with the cold wallet, registration data registered in a P2P database to transfer the digital asset on a basis of the transfer condition; and
   deleting the secret key having been used in the signing.

### REFERENCE SIGNS LIST

- 100: Digital asset transfer device
- 110: Control unit
- 111: User information processing unit
- 112: Transfer condition processing unit
- 113: Registration data processing unit
- 114: Key processing unit
- 120: Storage unit
- 121: User information storage unit
- 122: Transfer condition storage unit
- 130: Communication unit
- 200: Cold wallet
- 300: Node device
- 310: Control unit
- 320: P2P database
- 321: P2P database program
- 330: Communication unit
- 400: P2P network

## Claims

1. A digital asset transfer method executed by a computer, the method comprising:
acquiring death information of a user who owns a cold wallet;
identifying a transfer condition for a digital asset registered to an account associated with the cold wallet on a basis of the death information; and
signing, using a secret key associated with the cold wallet, registration data registered in a P2P database to transfer the digital asset on a basis of the transfer condition; and
deleting the secret key having been used in the signing.

2. The digital asset transfer method according to claim 1 further comprising transmitting the signed registration data to an external device for registration in the P2P database.

3. The digital asset transfer method according to claim 1 further comprising acquiring the death information through communication cooperation with an external device managed by a financial institution.

4. The digital asset transfer method according to claim 1, wherein the cold wallet is at least one of a hardware wallet in which information regarding the secret key is recorded or a wallet on which information regarding the secret key is stated.

5. The digital asset transfer method according to claim 1, wherein a target of the digital asset is at least one of a movable property including virtual currency or a financial product, or real estate.

6. The digital asset transfer method according to claim 5 further comprising performing processing related to a legal procedure required for transfer of the digital asset corresponding to the target of the digital asset.

7. The digital asset transfer method according to claim 1, wherein the secret key is at least one of information used for generating another key by a calculation formula of an elliptic curve or information generated from another key by a calculation formula of an elliptic curve.

8. The digital asset transfer method according to claim 1, wherein the secret key is represented by a mnemonic code.

9. The digital asset transfer method according to claim 1, wherein the secret key is at least one of two or more secret keys used in the signing performed to register the registration data in the P2P database.

10. The digital asset transfer method according to claim 1, wherein the digital asset is transferred to a certain account and then transferred to a transfer destination account by registration of the registration data in the P2P database.

11. The digital asset transfer method according to claim 1, wherein at least a part of processing is implemented by a predetermined program provided in the P2P database and executed on the P2P database.

12. The digital asset transfer method according to claim 1, wherein the P2P database is implemented by a blockchain.

13. A digital asset transfer device comprising:
a user information processing unit configured to acquire death information of a user who owns a cold wallet;
a transfer condition processing unit configured to identify a transfer condition for a digital asset registered to an account associated with the cold wallet on a basis of the death information; and
a registration data processing unit configured to sign, using a secret key associated with the cold wallet, registration data registered in a P2P database to transfer the digital asset on a basis of the transfer condition; and
a key processing unit configured to delete the secret key having been used in the signing.

14. A program that causes a computer to perform:
acquiring death information of a user who owns a cold wallet;
identifying a transfer condition for a digital asset registered to an account associated with the cold wallet on a basis of the death information; and
signing, using a secret key associated with the cold wallet, registration data registered in a P2P database to transfer the digital asset on a basis of the transfer condition; and
deleting the secret key having been used in the signing.
